# EUROPEAN PATENT APPLICATION

(11) **EP 4 760 615 A1**
(43) Date of publication of application: **17.06.2026**
(21) Application number: 25223413.3
(22) Date of filing: 15.12.2025
(51) Int. Cl.: G06Q 10/087

(54) **METHODS AND SYSTEMS OF DUAL-LAYERED TAG COMMUNICATIONS FOR INVENTORY MANAGEMENT AND PRECISION TRACKING**

(30) Priority: 16.12.2024 US 202418983136
(71) Applicant: T-Mobile Innovations LLC, Overland Park, KS 66251-2100 (US)
(72) Inventor: HOU, Pei, Centreville, 20120 (US); PACZKOWSKI, Lyle, Mission Hills, 66208 (US); RAMAN, Bharatwajan, Arlington, 22203 (US); SATAPATHY, Durga, Ashburn, 20148 (US)
(74) Representative: Suddaby, Mark Edward

(57) **Abstract**

A method comprises periodically receiving inventory data from one or more reader devices deployed in an inventory environment, the inventory data comprising tag data received from a plurality of tags positioned within a read zone of each of the one or more reader devices, instructing a millimeter wave reader device in the inventory environment to emit interrogation signals to locate the millimeter wave tag based on a detected event, receiving, from the millimeter wave reader device, millimeter wave tag data and signal metadata based on a response received from the millimeter wave tag, and determining a location of the item based on the millimeter wave tag data, the signal metadata, and reader data associated with the millimeter wave reader device.

## Description

### BACKGROUND

Modern inventory environments (e.g., warehouses and retail stores) may store items on behalf of various customers/business enterprises. Each item may be coupled to one or more tags, such as a Radio Frequency Identification (RFID) tag. Antenna systems and/or reader devices may be positioned throughout the inventory environment. RFID tags may include various components, such as, for example, an integrated circuit for storing and processing information, an antenna for communicating signals, etc. For example, the integrated circuit may include memory for storing tag data (e.g., a unique identifier), a modulator for modulating signals, and circuitry for power management. The RFID tag may receive signals from antenna systems/reader devices to obtain power, obtain power from the received signals, and transmit responses back to the reader devices.

### SUMMARY

In an embodiment, method of dual-layered tag communications for inventory management and precision tracking is disclosed. The method comprises receiving, by an application executing at a computer system in an inventory system, first inventory data from a first reader device deployed in an inventory environment at a first time, in which the first inventory data comprises tag data received from a RFID tag positioned on an item within a first read zone of the first reader device at the first time, and receiving, by the application, second inventory data from a second reader device deployed in the inventory environment at a second time subsequent to the first time, in which the second inventory data comprises the tag data received from the RFID tag positioned on the item within a second read zone of the second reader device at the second time. The method further comprises detecting, by the application, an event associated with the RFID tag based on the first inventory data and the second inventory data indicating that the RFID tag has moved from the first read zone of the first reader device at the first time to the second read zone of the second reader device at the second time, and instructing, by the application, one or more millimeter wave reader devices in the inventory environment to emit interrogation signals to locate a second tag positioned on the item within the second read zone. The method further comprises receiving, by the application from a millimeter wave reader device of the one or more millimeter wave reader devices, second tag data and signal metadata based on a response received from the second tag, wherein the signal metadata includes a signal strength of the response received by the millimeter wave reader device and an angle of arrival of the response received by the millimeter wave reader device, and determining, by the application, a location of the second tag based on the signal strength and the angle of arrival.

In another embodiment, an inventory system is disclosed. The inventory system comprises an item, a first reader device, a millimeter wave reader device reader device, and a management system. The item is coupled to a RFID tag configured to emit first signals omnidirectionally, and a millimeter wave tag configured to emit second signals in a predefined direction. The first reader device is configured to, at a first time, receive first signals carrying RFID tag data from the RFID tag on the item, and forward the RFID tag data to a management system, at a second time subsequent to the first time, the first signals are not received from the RFID tag. The management system comprises an application stored in a memory of the management system, which when executed by a processor of the management, causes the application to be configured to store, after the first time, the RFID tag data, determine, after the second time, that a trigger event has occurred based on the RFID tag not being detected by the first reader device, and instruct a millimeter wave reader device to emit interrogation signals to locate the item in response to the trigger event. The millimeter wave reader device is configured to receive, from the millimeter wave tag on the item, second signals carrying second tag data and signal metadata describing the second signals, and forward the second tag data and signal metadata to the management system, and the application at the management system is further configured to determine a location of the item based on the second tag data and the signal metadata.

In yet another embodiment, a method is disclosed. The method comprises periodically receiving, by an application executing at a computer system in an inventory system, inventory data from one or more reader devices deployed in an inventory environment, in which the inventory data comprises tag data received from a plurality of tags positioned within a read zone of each of the one or more reader devices, detecting, by the application, an event associated with at least one of the tags and occurring within the read zone of the one or more reader devices, in which an item in the inventory environment is coupled to the at least one of the tags and a millimeter wave tag, instructing, by the application, one or more millimeter wave reader devices in the inventory environment to emit interrogation signals to locate the millimeter wave tag, receiving, by the application from a millimeter wave reader device of the one or more millimeter wave reader devices, millimeter wave tag data and signal metadata based on a response received from the millimeter wave tag, and determining, by the application, a location of the item based on the millimeter wave tag data, the signal metadata, and reader data associated with the millimeter wave reader device.

These and other features will be more clearly understood from the following detailed description taken in conjunction with the accompanying drawings and claims.

### BRIEF DESCRIPTION OF THE DRAWINGS

For a more complete understanding of the present disclosure, reference is now made to the following brief description, taken in connection with the accompanying drawings and detailed description, wherein like reference numerals represent like parts.
FIG. 1 is a block diagram of a communication network including a dual-layered inventory system for reading RFID tags according to various embodiments of the disclosure.
FIGS. 2A and 2B are diagrams illustrating the detection of a first trigger event occurring in the inventory system of FIG. 1 according to various embodiments of the disclosure.
FIGS. 3A and 3B are diagrams illustrating the detection of a second trigger event occurring in the inventory system of FIG. 1 according to various embodiments of the disclosure.
FIG. 4 is a flowchart illustrating a first method of dual-layered tag communications for inventory management and precision tracking using the inventory system of FIG. 1 according to various embodiments of the disclosure.
FIG. 5 is a flowchart illustrating a second method of dual-layered tag communications for inventory management and precision tracking using the inventory system of FIG. 1 according to various embodiments of the disclosure.
FIG. 6 is a block diagram of a computer system implemented within the communication system of FIG. 1 according to an embodiment of the disclosure.

### DETAILED DESCRIPTION

It should be understood at the outset that although illustrative implementations of one or more embodiments are illustrated below, the disclosed systems and methods may be implemented using any number of techniques, whether currently known or not yet in existence. The disclosure should in no way be limited to the illustrative implementations, drawings, and techniques illustrated below, but may be modified within the scope of the appended claims along with their full scope of equivalents.

RFID reader devices (also referred to herein as "reader devices") operate by emitting radio frequency signals through antennas to communicate with RFID tags attached to items in an inventory environment, such as a warehouse or retail store. These RFID tags may be low-cost, ultra-high frequency (UHF) tags that may operate in the frequency range of 300 megahertz (MHz) to 3 gigahertz (GHz), with some reader devices operating in frequencies between 860 MHz and 960 MHz, for example. These UHF tags may be read from distances of several meters, making them ideal for applications in inventory management and control. The corresponding reader devices may be programmed to operate on a similar UHF frequency range to read the UHF tags. For example, a reader device may send an interrogation signal (e.g., radio frequency signal) that powers up the tags, which then respond with tag data including unique identification data. The reader device receives the tag data from the tags and forwards the tag data to an external inventory management system for further processing. By scanning multiple tags in a read zone of the reader device, the reader device can perform bulk item tracking and inventory counts, allowing businesses to manage inventory stock efficiently.

However, using UHF tags for inventory tracking can be problematic, particularly when precise location determination is desired. While UHF tags are cheaper (e.g., may be used on thousands of items at a low cost), UHF tags have significant limitations when it comes to accurately identifying an item location. For example, the signals from UHF tags can only provide an approximate location of the tag, with errors up to several feet to several tens of feet, making it difficult to pinpoint exactly where an item is located within an inventory environment. In some cases, multiple reader devices may be used to perform trilateration on the signals received from the tags, but even then, trilateration-based location determination used UHF signals may still be largely inaccurate. This makes it challenging to detect when items move within the inventory environment or leave the environment altogether, leading to inefficiencies in inventory tracking and management. Therefore, inventory systems may be experiencing technical problems in the technical field of inventory management and precision tracking of tags.

The present disclosure addresses the foregoing technical problems by providing a technical solution in the technical field of inventory management and precision tracking of tags, by deploying a dual-layered inventory system in an inventory environment. The dual-layered inventory system includes different types of reader devices triggered in a dual-layered manner, as further described herein, which may perform more accurate inventory management and location tracking of high-value items attached to both UHF tags (also referred to herein as "tags") and millimeter wave ("mmWave") tags.

In an embodiment, the dual-layered inventory system may include different types of reader devices, antennas (e.g., separate from the reader devices or integrated with the reader devices), different types of tags positioned on items, and a management system that controls the operations of the reader devices. The different types of reader devices may include reader devices that are configured to operate on the UHF frequency bands (e.g., between 300 MHz to 3 GHz) to communicate with UHF tags, and mmWave reader devices that are configured to operate on mmWave frequency bands (e.g., between 30 GHz to 300 GHz) to communicate with mmWave tags. The different types of tags positioned on the items may include UHF tags that may operate to communicate on UHF frequency bands, and mmWave tags that may operate to communicate on mmWave frequency bands. Both UHF tags and mmWave tags may include a memory storing tag data, a processor, and one or more antennas configured to communicate the tag data. However, the antennas in the UHF tags transmit signals carrying the tag data in an omnidirectional manner, whereas the antennas in the mmWave tags are arranged and configured in a manner to perform beamforming and direct the signals carrying the tag data in the direction of the requesting reader device.

An inventory environment (e.g., a retail store and warehouse) may include any number of items (up to thousands or millions of different items), and each item may include at least one UHF tag. However, certain items of a predefined type (e.g., high value items, high security items, protected items, historical items, etc.) may include both UHF tags and a mmWave tag, to enable precise inventory tracking and ensure that the system is always aware of the location of the more significant items in the inventory environment. The management system may include a data store for storing data used to manage the operations of the reader devices deployed in the inventory environment, and may include a management application to receive and process the data from the reader devices, and instruct the reader devices based on the data, as further described herein. The management system may be deployed within the inventory environment or external to the inventory environment.

The dual-layered inventory system may refer to the following two layers: a first layer including the reader devices that are configured to operate on the UHF frequency bands and communicate with the UHF tags (sometimes referred to herein as "UHF reader devices"), and a second layer including the reader devices configured to operate on the mmWave frequency bands and communicate with the mmWave tags based on various conditions (sometimes referred to herein as "mmWave reader devices"), as further described herein. In an embodiment, both the UHF reader devices and mmWave reader devices may communicate over licensed frequency bands, or frequency ranges that are exclusively assigned to a wireless communication service provider. For this reason, the UHF reader devices and mmWave reader devices may transmit at much higher power levels than is permitted in other RFID readers communicating in the industrial, scientific, and medical (ISM) frequency bands.

In an embodiment, the UHF reader devices may periodically emit interrogation signals omnidirectionally into an area within the inventory environment to power the UHF tags within a read zone of the UHF reader devices and trigger the UHF tags to transmit back tag data to the UHF reader devices. A read zone of a reader device refers to an area within the inventory environment in which the reader device is capable of reliably powering and communicating with a tag. The tag data received by the UHF reader devices from the UHF tags may be aggregated as inventory data associated with the read zone of the UHF reader device and forwarded to the management system for further processing. In this way, the management system may periodically receive inventory data describing the UHF tags, and thus the corresponding items, within a read zone of each UHF reader device within the inventory environment.

A management application executing on a processor of the management system may operate based on trigger event rules stored in a data store of the management system, in which the trigger event rules (e.g., instructions, logic, or code) define actions that the management application may perform with respect to the received inventory data. For example, the trigger event rules may include instructions for the management application to compare the periodically received inventory data from a single UHF reader device, to determine whether a new UHF tag is detected in the read zone of the UHF reader device and/or determine whether a previously detected UHF tag is no longer in the read zone. The trigger event rules may include next steps for the management application to perform based on the comparison of the inventory data. For example, the trigger event rules may include an instruction for the management application to instruct one or more mmWave reader devices to scan for a particular mmWave tag positioned on the same item as a newly detected or missing UHF tag. The trigger event rules may indicate which mmWave reader devices to activate based on the detected event in the read zone. The trigger event rules may also instruct the management application to compute a location of the item based on tag data received from the mmWave tag.

There may be two trigger events that the management application may detect, which may trigger the management application to instruct mmWave reader devices to perform scans. The first trigger event may occur when an item is detected as missing from a read zone of a UHF reader device. The management application may detect a missing item by comparing currently received inventory data (which includes identification data of UHF tags received at the current time) with previously received inventory data from the UHF reader device (which includes identification data of UHF tags received at a prior time). This comparison may indicate that a UHF tag, and thus the attached item that was previously located in the read zone of the UHF reader device, is no longer in the read zone of the UHF reader device. Based on the detection of this missing item trigger event, the management application may determine a next task to perform using a trigger event rule. The trigger event rule may indicate that when the missing item trigger event is detected, the management application is to trigger one or more mmWave reader devices to scan the entire inventory environment or predefined areas within the inventory environment to locate the missing item by detecting a mmWave tag positioned on the item. The management application may then instruct, based on the trigger event rule, one or more mmWave reader devices to emit interrogation signals to power mmWave tags within read zones of the mmWave reader devices, and trigger the mmWave tags to transmit back responses with tag data.

A trigger event rule may indicate whether the management application is to instruct all of the mmWave reader devices in the inventory environment or particular ones of the mmWave reader devices in the inventory environment based on the missing item trigger event. To this end, the management system may maintain reader data indicating the known location of all the reader devices (both UHF and mmWave) in the inventory environment (e.g., the reader data indicates the mmWave reader devices positioned within the read zone of other UHF reader devices). For example, a trigger event rule may indicate that the management application is to only instruct mmWave reader devices positioned near the entrances/exists of the inventory environment, or only instruct mmWave reader devices positioned in changing rooms/restrooms in the inventory environment. Additionally or alternatively, the trigger event rule may indicate that the management application is to only instruct mmWave reader devices positioned within a predefined distance from a last known location of the missing item. Additionally or alternatively, the trigger event rule may indicate that the management application is to instruct all of mmWave reader devices in the inventory environment.

A second trigger event may occur when an item is detected as having moved from a read zone of a first UHF reader device to a read zone of a second UHF reader device. The management application may detect a moved item by comparing currently received inventory data from the first UHF reader device with previously received inventory data from the first UHF reader device (indicating that the moved item is no longer in the read zone of the first UHF reader device), and then determining that currently received inventory data from a second UHF reader device identifies the tag data from the UHF tag on the missing item. This comparison may indicate that a UHF tag, and thus the attached item, that was previously located in the read zone of the first UHF reader device, is no longer in the read zone of the first UHF reader device, and has moved to a read zone of the second UHF reader. Based on the detection of this moving item trigger event, the management application may determine a next task to perform based on a trigger event rule. The trigger event rule may indicate that when the moving item trigger event is detected, the management application is to be instructed to trigger one or more mmWave reader devices to scan the read zone of the second UHF reader device to locate the moved item by detecting a mmWave tag positioned on the item. The management application may then instruct, based on the trigger event rule, one or more mmWave reader devices to emit interrogation signals to power mmWave tags within the read zone of the second UHF reader device, and trigger the mmWave tags to transmit back responses with tag data.

A trigger event rule may indicate which mmWave reader devices the management application is to instruct based on the moving item trigger event. For example, a trigger event rule may indicate that the management application is to only instruct mmWave reader devices positioned within the read zone of the second UHF reader device when the moving item trigger event is based on a detection that the item has moved to the read zone of the second UHF reader device.

Regardless of the trigger event, the mmWave tags positioned on items within the read zones of the mmWave reader devices may receive the interrogation signals from the mmWave reader devices/antennas. The mmWave tags may harvest power from the interrogation signals and obtain locally stored tag data at the mmWave tag. One or more antennas of the mmWave tags may be arranged and configured in a manner to perform beamforming, to specifically direct a signal carrying the tag data back to the mmWave reader device from which the interrogation signal was received. In this way, the mmWave tags are enabled to direct a signal carrying the tag data in the direction of the mmWave reader device (as opposed to omnidirectionally backscattering signals carrying the tag data). The mmWave reader devices may receive the signals carrying the tag data, and forward the tag data and signal metadata of the signal received by the mmWave reader devices to the management system. The tag data may include, for example, an identifier of the mmWave tag, an identification of the item coupled to the mmWave tag (e.g., a product code/category number identifying the type of item), a tag code of the mmWave tag, etc. The signal metadata may include, for example, values corresponding to a signal strength of the signal received from the mmWave tag, a high-precision time of arrival indicating when exactly the mmWave tag was read, an angle of arrival of the signal, phase information measuring a phase of a signal, an identifier of the mmWave reader device receiving the signal, a known location of the mmWave reader device receiving the signal, a specific frequency/channel over which the signal was received, an identifier of the antenna at the mmWave reader device that received the signal, a number of times the mmWave reader device has previously read the mmWave tag, etc.

The management application at the management system may receive the tag data and signal metadata from the mmWave reader devices and then use this data to determine a more accurate location of a particular item. For example, the management application may use the signal strength, time of arrival, and angle of arrival of the signal received from the mmWave tag (carried in the signal metadata) to perform location calculations and identify a more precise location of a mmWave tag on missing item or a moved item (e.g., using distance estimation equations and models).

Since mmWave technology operates directionally at much higher frequencies than UHF, using shorter wavelengths than UHF, and since the computation of the location of the tag is not just based on signal strength, but also on angle of arrival, time of arrival, phase information, reader location, etc., the computed location of the mmWave tag is far more precise and accurate than a location computed based on a signal received from a UHF tag. For example, the higher frequencies and shorter wavelengths used for mmWave signal transmission allows for a more precise measurement of time and angle of arrival, since smaller wavelengths improve the resolution of distance and direction calculations. In addition, the mmWave tag is capable of beamforming, and therefore, the management application is able to calculate the exact direction from which the signal is arriving, which contributes to a more accurate positioning of the item. Even further, mmWave signals are less prone to interference and multipath effects, making location determination more reliable compared to those performed based on UHF signals that are more susceptible to interference.

Accordingly, the embodiments disclosed herein use a dual-layered inventory system with both low-cost, UHF reader devices and mmWave reader devices, in which the mmWave reader devices are only programmed to act in response to detecting particular trigger events related to the movement of high value items having both UHF tags and mmWave tags. As described above, signals received by UHF reader devices from UHF tags may not reliably be used to determine a location of the tag and corresponding item. However, signals received by mmWave reader devices from mmWave tags may reliably and efficiently be used to determine a location of the tag and corresponding item. Therefore, the embodiments disclosed herein enable a more efficient use of the resources in the inventory system to more accurately identify missing and moving items in the inventory environment, thereby increasing inventory system efficiency and capacity.

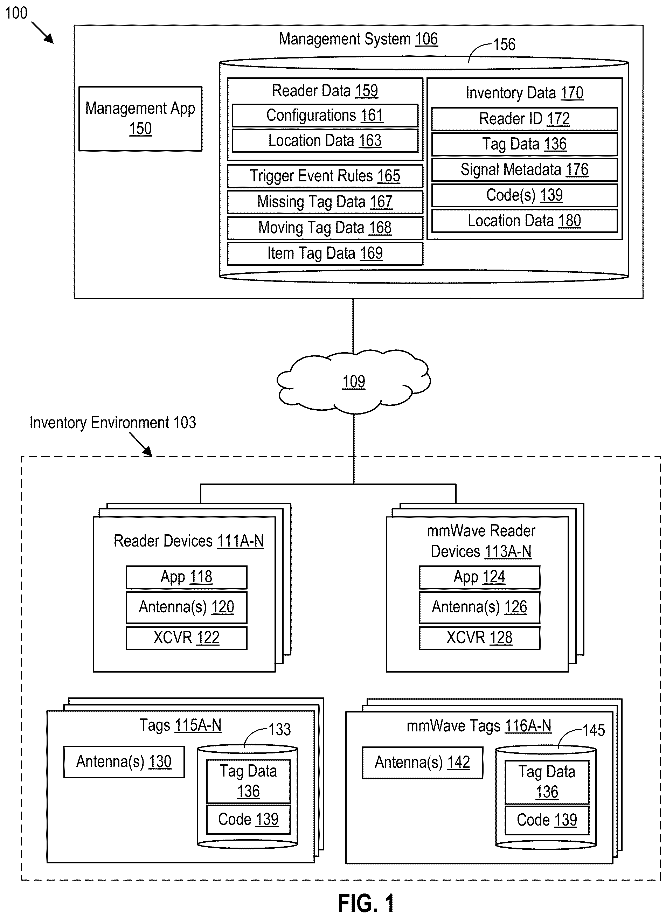

Turning now to FIG. 1, a communication network 100 is described. The communication network 100 includes an inventory environment 103, a management system 106, and a network 109. The inventory environment 103 includes one or more reader devices 111A-N, mmWave reader devices 113A-N, tags 115A-N, and mmWave tags 116A-N. The network 109 may be one or more private networks, one or more public networks, or a combination thereof. While the management system 106 is shown in FIG. 1 as being separate from network 109, in some embodiments, it should be appreciated that the management system 106 may be part of the network 109. In the embodiment shown in FIG. 1, an inventory system may include the management system 106, the reader devices 111A-N, mmWave reader devices 113A-N, tags 115A-N, and mmWave tags 116A-N.

The tags 115A-N and mmWave tags 116A-N may each be RFID tags, or small devices used in inventory systems to store and transmit data wirelessly to reader devices 111A-N and 113A-N. The tags 115A-N and mmWave tags 116A-N may each be coupled to (e.g., affixed to) different items and thus may be used for tracking and identifying the items, enabling efficient inventory management and asset tracking in various inventory environments 103 (e.g., warehouses, retail stores, centers, etc.). Each of the tags 115AN and mmWave tags 116A-N includes a microchip (e.g., an integrated circuit with processing and memory resources) for data storage and processing, one or more memories, and one or more antennas for communication.

The tags 115A-N may refer to low-cost, ultra-high frequency (UHF) tags that may operate, for example, in a first frequency range of 600 MHz to 3 GHz, allowing for communications with the reader devices 111A-N. In an embodiment, the tags 115A-N may operate to communicate readers over a licensed frequency band in the first frequency range. The licensed spectrum can overlap the unlicensed ISM bands. For example, the tags 115A-N may operate over a 860 - 960 MHz frequency band or a 2.4 GHz frequency band. In this way, the commercially available UHF tags can be used to communicate with the reader devices transmitting with much higher power in licensed bands. On the other hands, the tags and reader devices can be also designed to operate in any available licensed bands between 600 MHz and 3 GHz. The tags 115A-N may be used for inventory managements and logistics purposes due to the ability of the tags 115A-N to be read from a distance at high speeds. As shown in FIG. 1, the tags 115A-N include an antenna 130 and a data store 133 (e.g., one or more memories). The antenna 130 is configured to capture and transmit UHF radio signals, enabling communication and efficient data transfer. The data store 133 may store tag data 136 and one or more codes 139. The tag data 136 may include a variety of data, such as, for example, a tag identifier (e.g., a unique serial number or electronic product code (EPC) distinguishing different tags 115A-N from one another), item information (e.g., data about the item to which the tag 115A-N is attached), manufacturer or supplier information about the item, logistics data, usage data (e.g., records and when and where the tag 115A-N has been scanned), etc. The code 139 may refer to a predefined value or password associated with the tag 115A-N, the item attached to the tag 115A-N, and/or a category or grouping of items attached to tags 115A-N (the items in the group having a common attribute/function or being of a common type). For example, one or more tags 115A-N may have a different code 139, which may be included in an interrogation signal to trigger only the respective tag 115 having the code 139 to respond.

The mmWave tags 116A-N may refer to RFID tags operating at much higher frequencies (e.g., between 24 GHz and 300 GHz), allowing for precise communication with mmWave reader devices 113A-N (and in some cases, the reader devices 11A-N). For example, the mmWave tags 116A-N may operate over a licensed 47 GHz frequency channel. As shown in FIG. 1, the mmWave tags 116A-N include one or more antennas 142 and a data store 145 (e.g., one or more memories). The one or more antennas 142 (e.g., arranged as an antenna array) may be configured to perform beamforming to direct signals in a particular direction. The beamforming may optimize the signal strength of signals emitted from the mmWave tag 116A-N, thereby improving communication in environments where precision is critical. The data store 145 may similarly store tag data 136 and one or more codes 139.

The reader devices 111A-N and mmWave reader devices 113A-N may be electronic devices or computer systems. The reader devices 111A-N and mmWave reader devices 113A-N may include antennas 120 and 126 configured to transmit interrogation signals to the tags 115A-N and/or mmWave tags 116A-N, or may instruct separate antennas to transmit interrogation signals to the tags 115A-N and/or mmWave tags 116A-N. The interrogation signals serve both to power the tags 115A-N and/or mmWave tags 116A-N and to trigger the tags 115A-N and/or mmWave tags 116A-N to respond to the signal with at least a portion of the respective tag data 136. In an embodiment, the reader devices 111A-N and mmWave reader devices 113A-N may operate over licensed frequency bands, as opposed to unlicensed ISM frequency bands, enabling the reader devices 111A-N and mmWave reader devices 113A-N to transmit at much higher power levels than other RFID readers communicating over the communal ISM frequency bands. This much higher level of power may enable the reader devices 111A-N and mmWave reader devices 113A-N to read the tags 115A-N and/or mmWave tags 116A-N from much greater distances.

The reader devices 111A-N may be devices that are configured to communicate with tags 115A-N over UHF frequency bands (e.g., between 600 MHz to 3 GHz). For example, the reader devices 111A-N may include antennas 120 and other communication equipment enabling the reader devices 111A-N to communicate with the tags 115A-N over the UHF frequency bands. In some cases, the reader devices 111A-N may also include antennas and other communication equipment enabling the reader devices 111A-N to communicate with the mmWave tags 116A-N over mmWave frequency bands (e.g., between 24 GHz to 300 GHz). The reader devices 111A-N may also include an application 118 and a radio transceiver 122 (shown as "XCVR 112" in FIG. 1). The application 118 may be instructions stored on a memory of the reader device 111A-N, which may be executed by a processor of the reader device 111A-N to scan the tags 115A-N for inventory management, receive tag data 136 from the tags 115A-N, and communicate tag data 136 and other data upstream to the management system 106. The radio transceiver 122 may include radio equipment enabling the reader devices 111A-N to communicate with other devices in the inventory environment 103 and/or to the management system 106 over the network 109.

The mmWave reader devices 113A-N may be devices that are configured to communicate with mmWave tags 115A-N over mmWave frequency bands (e.g., between 24 GHz to 300 GHz). For example, the mmWave reader devices 113A-N may include antennas 126 and other communication equipment enabling the mmWave reader devices 113A-N to communicate with the mmWave tags 116A-N over the mmWave frequency bands. In some cases, the mmWave reader devices 113A-N may also include antennas and other communication equipment enabling the mmWave reader devices 113A-N to communicate with the tags 115A-N over UHF frequency bands. The mmWave reader devices 113A-N may also include an application 124 and a radio transceiver 128 (shown as "XCVR 128" in FIG. 1). The application 124 may be instructions stored on a memory of the mmWave reader devices 113A-N, which may be executed by a processor of the mmWave reader devices 113A-N to scan the mmWave tags 116A-N for inventory management, receive tag data 136 from the mmWave tags 116A-N, and communicate tag data 136 and other data upstream to the management system 106. The radio transceiver 128 may include radio equipment enabling the mmWave reader devices 113A-N to communicate with other devices in the inventory environment 103 and/or to the management system 106 over the network 109.

The management system 106 may be a device, UE, computer, or computer system, with various types of resources that may be interworked to control the operations of the reader devices 111A-N and mmWave reader devices 113A-N to maintain accurate data regarding tags 115A-N and 116A-N in the inventory environment 103. The management system 106 may include a processor, a memory, a radio transceiver, and other hardware or software components depending on the type of computer system running the management system 106. The management system 106 may include a management application 150, which may include instructions stored on a memory of the management system 106 and executable by a processor of the management system 106. The management application 150 may communicate with the reader devices 111A-N and mmWave reader devices 113A-N, as further disclosed herein. For example, system management 150 may programmatically evaluate the inventory data received from the reader devices 111A-N and mmWave reader devices 113A-N, determine whether a trigger event has occurred, and instruct the reader devices 111A-N and mmWave reader devices 113A-N accordingly, as further described herein.

The management system 106 may also include a data store 156 (e.g., one or more memories, distributed or co-located). The data store 156 may store reader data 159, trigger event rules 165, missing tag data 167, moving tag data 168, item tag data 169, and inventory data 170. The reader data 159 may include data describing the reader devices 111A-N and mmWave reader devices 113A-N deployed in the inventory environment 103. Specifically, the reader data 159 may include configurations 161 and location data 163 for each of the reader devices 111A-N and mmWave reader devices 113A-N deployed in the inventory environment 103. The configurations 161 may indicate whether the reader devices 111A-N and mmWave reader devices 113A-N are each structured and configured to communication over UHF frequency bands and/or mmWave frequency bands, and if so, which specific frequency channels over which the reader devices 111A-N and mmWave reader devices 113A-N are capable of communicating. The location data 163 may indicate a known location of the reader devices 111A-N and mmWave reader devices 113A-N deployed in the inventory environment 103. The known location may be formatted as Global Positioning System (GPS) coordinates, a geohash value, and/or any other value identifying a location of each of the reader devices 111A-N and mmWave reader devices 113A-N. For example, the location data 163 may be used to determine the mmWave reader devices 113A-N to activate in response to different trigger events.

The trigger event rules 165 define actions that the management application 150 may perform with respect to the data received from the reader devices 111A-N and mmWave reader devices 113A-N. For example, the trigger event rules 165 may include instructions for the management application 150 to compare the periodically received data from a single reader device 111A-N, to determine whether a new tag 115A-N is detected in the read zone of the reader device 111A-N and/or determine whether a previously detected tag 115A-N is no longer in the read zone. The trigger event rules 165 may include next steps for the management application 150 to perform based on the comparison of the data. For example, the trigger event rules 165 may include an instruction for the management application 150 to instruct one or more mmWave reader devices 113A-N to scan for a particular mmWave tag 116A-N positioned on the same item as a moving or missing tag 115A-N. The trigger event rules 165 may also instruct the management application 150 to compute a location of the item based on data received from the mmWave tag 116A-N.

The missing tag data 167 may include data describing tags 115A-N (and the corresponding items) that have been detected as missing from a read zone of a reader device 111A-N by the management application 150. For example, the data may include an identification of the tag 115A-N, an identification of the item, a code 139 associated with the tag 115A-N, or any other data from the tag data 136 of the tag 115A-N. The moving tag data 169 may include data describing tags 115A-N (and the corresponding items) that have been detected as moving from a read zone of a first reader device 111AN to a read zone of a second reader device 111A-N by the management application 150. For example, the data may include an identification of the tag 115A-N, an identification of the item, a code 139 associated with the tag 115A-N, or any other data from the tag data 136 of the tag 115A-N.

The item tag data 169 may be pre-loaded with data describing the items that include both tags 115A-N (e.g., UHF tags) and mmWave tags 116A-N. As mentioned above, only pre-defined items or pre-defined types of items may include both tags 115AN (e.g., UHF tags) and mmWave tags 116A-N. These tags 115A-N and mmWave tags 116A-N may be manually attached to these items by an operator in the inventory environment, a manufacturer, or other employee associated with the protection of the items. The item tag data 169 may include entries identifying the items that include both tags 115A-N and mmWave tags 116A-N, and in some cases, the tag data 136 from each of the respective tags 115A-N and mmWave tags 116A-N on the item.

The inventory data 170 may include data obtained from (or based on the data obtained from) the tags 115A-N and/or the mmWave tags 115A-N via the reader devices 111A-N and/or the mmWave reader devices 113A-N. As shown in FIG. 1, the inventory data 170 may include a reader identification 172, tag data 136, signal metadata 176, code(s) 139, and/or location data 180. The reader identification 172 may include an identifier and/or location of the reader devices 111A-N and/or the mmWave reader devices 113A-N from which the tag data 136 is received. The signal metadata 176 may include data describing the signal over which the tag data 136 is received. The signal metadata 176 may include, for example, values corresponding to a signal strength of the signal carrying the tag data 136, a high-precision time of arrival indicating when exactly the signal was read, an angle of arrival of the signal, phase information measuring a phase of a signal, an identifier of the reader device 111A-N and/or 113A-N receiving the signal, a known location of the reader device 111A-N and/or 113A-N receiving the signal, a specific frequency/channel over which the signal was received, an identifier of the antenna at the reader device 111A-N and/or 113A-N that received the signal, a number of times the reader device 111A-N and/or 113A-N has previously read the tag 115A-N and/or 116A-N, etc. The location data 180 may include the location of the tag 115A-N and/or 116A-N, as determined by the management application 150.

The inventory data 170 may include entries for each of the different reader identifications 172, with the corresponding tag data 136, signal metadata 176, code(s) 139, and location data 180 stored with the respective reader identification 172. As additional inventory data 170 is received from the reader devices 111A-N and mmWave reader devices 113A-N, additional entries may be added for the respective reader identification 172, with timestamps indicating the times of receiving the inventory data 170 from the reader devices 111A-N and mmWave reader devices 113A-N.

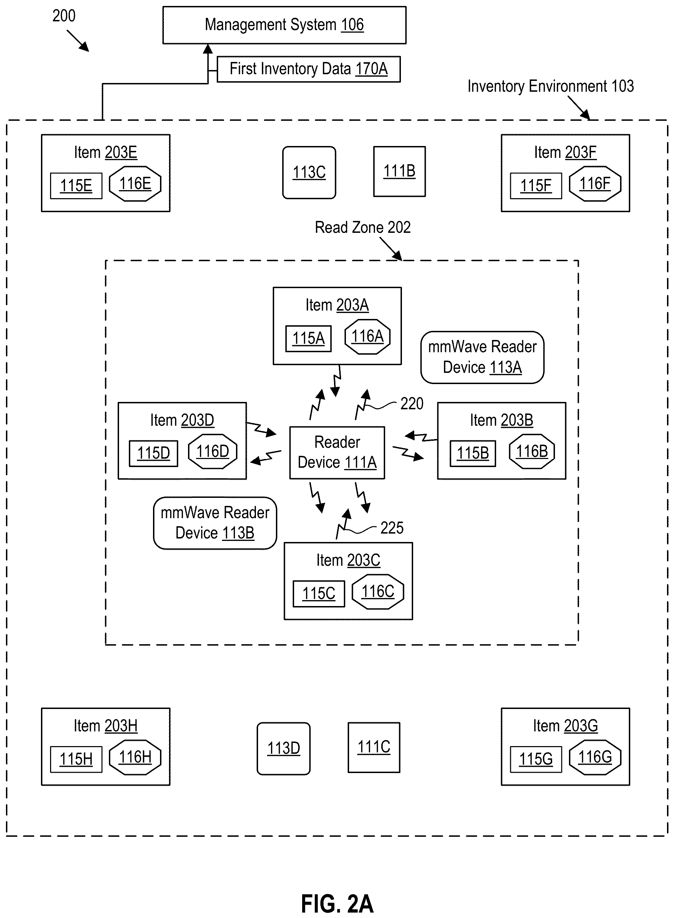

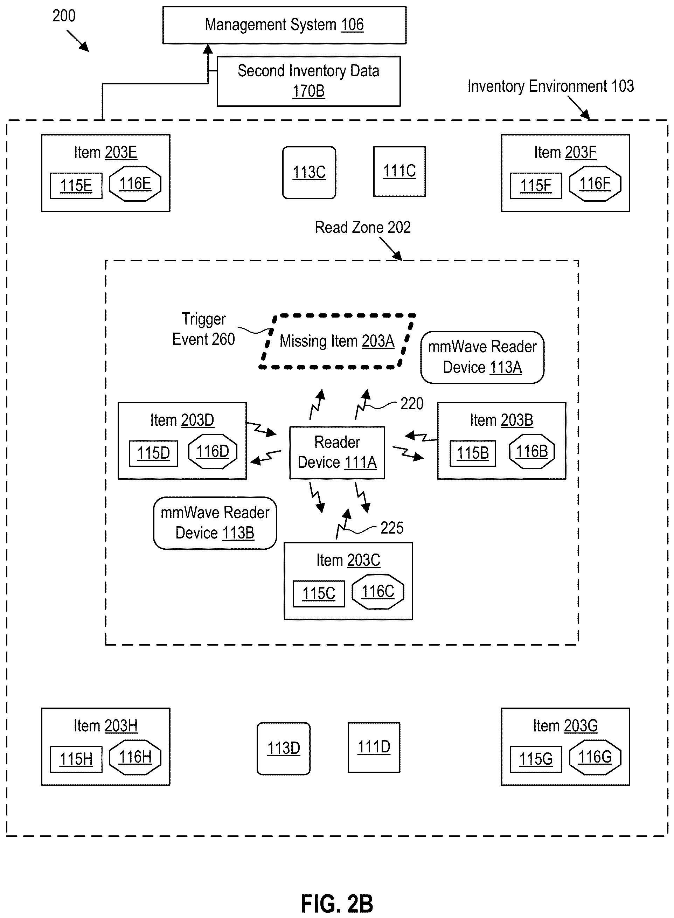

Referring now to FIGS. 2A-2B, shown are diagrams and illustrating the detection of a missing item trigger event. Specifically, FIG. 2A illustrates an inventory system and inventory environment 103 prior to the item going missing from the read zone of a reader device 111A-N, and FIG. 2B illustrates the inventory system and inventory environment 103 after the item goes missing from the read zone of the reader device 111A-N.

Turning specifically now to FIG. 2A, shown is an inventory system 200 including the management system 106, reader devices 111A-C, mmWave reader devices 113A-113D, and items 203A-H, each including a tag 115A-H and mmWave tag 116A-H, respectively. The inventory environment 103 includes the reader devices 111A-C, mmWave reader devices 113A-113D, and items 203A-H. It should be appreciated that any number of items, with any number or type of tags, may be at least temporarily located in different areas of the inventory environment 103. Similarly, it should be appreciated that the any number of reader devices 111A-N and mmWave reader devices 113A-N may be deployed in different areas of the inventory environment 103.

Each reader device 111A-C and mmWave reader device 113A-D may have a corresponding read zone 202, which may refer to the area within the inventory environment 103 in which the reader device 111A-C (and mmWave reader device 113A-D) is capable of reliably powering and communicating with a tag 115A-H (and/or mmWave tag 116A-H).

As shown in FIG. 2A, the reader device 111A has a read zone 202 covering an area in which items 203A, 203B, 203C, and 203D are located (i.e., the reader device 111 is capable of powering and communicating with the tag 115A item 203A, tag 115B of item 203B, tag 115C of item 203C, and tag 115D of item 203D). Item 203A includes a tag 115A and a mmWave tag 116A, item 203B includes a tag 115B and a mmWave tag 116B, item 203C includes a tag 115C and a mmWave tag 116C, and item 203D includes a tag 115D and a mmWave tag 116D. The mmWave reader devices 113A and 113B are also located within the read zone 202 of the reader device 111A. Meanwhile, items 203E, 203F, 203G, and 203H are located within the inventory environment 103, but outside the read zone 202 of the reader device 111A (i.e., the reader device 111A may not be capable of powering and communicating with the tags 115E and 116E of item 203E, tags 115F and 116F of item 203F, tags 115G and 116G of item 203G, and tags 115H and 116H of item 203H). Item 203E includes a tag 115E and a mmWave tag 116E, item 203F includes a tag 115F and a mmWave tag 116F, item 203G includes a tag 115G and a mmWave tag 116G, and item 203H includes a tag 115H and a mmWave tag 116H. The reader devices 111B-C and mmWave reader devices 113C-D may also be located within the inventory environment 103, but outside the read zone 202 of the reader device 111A.

An antenna included in the reader device 111A or controlled by the reader device 111A may emit interrogation signals 220 into the read zone 202 over the UHF frequency band. All of the tags 115A-D in the read zone 202 that include antennas capable of communicating over the UHF frequency band may power up and radiate tag data 136 over response signals 225 back to the reader device 111A. The application 118 at the reader device 111A may collect the tag data 136 in response signals 225 received from each of the tags 115A-D, with a reader identification 172 of the reader device 111A, signal metadata 176 determined based on the response signals 225, a code(s) 139 carried in the tag data 136, and any other information related to the response signals 225 and or tags 115A-D, and aggregate this data into first inventory data 170A. The reader device 111A may transmit the first inventory data 170A to the management system 106, and the management application 150 may store the first inventory data 170 in an entry with the reader identification 172 and a timestamp of reading the tags 115A-D in the read zone 202.

Turning now to FIG. 2B, shown is the inventory system 200 after the item 203A has gone missing from the read zone 202. The inventory system 200 shown in FIG. 2B is substantially the same as the inventory system 200 shown in FIG. 2A, except that the inventory system 200 shown in FIG. 2B does not include the item 203A, and thus the corresponding tags 115A and 116A. Items, such as item 203A, may go missing from areas within an inventory environment 103 for a variety of reasons, such as, for example, theft of the item 203A, necessary relocation of the item 203A, tag reorientation issues (to find another place for a tag 115A, 116B), interference, damage to the item or the tag 115A, 116A, environmental factors (e.g., changes in temperature, humidity, etc. that can affect the tag 115A, 116A or the item 203A), etc.

A trigger event 260 may occur when the missing item 203A is detected by, for example, the management application 150 of the management system 106. The management application 150 may detect the missing item trigger event 260 by subsequently receiving second inventory data 170B from the reader device 111A indicating the tags 115B-D and corresponding items 203B-D that are still within the read zone 202. As described above with reference to FIG. 2A, the reader device 111A may obtain the inventory data 170B by emitting interrogation signals 220 into the read zone 202. The tags 115B-D may respond to the interrogation signals 220 by sending response signals 225 carrying the tag data 136 for each of the respective tags 115B-D. The application 118 at the reader device 111A may aggregate the tag data 136 for each of the tags 115B-D, with the reader identification 172, signal metadata 176, and code 139, into the second inventory data 170B, and forward the second inventory data 170B to the management system 106. The management application 150 may store the second inventory data 170B in an entry with the reader identification 172 and a timestamp of reading the tags 115B-D in the read zone 202.

The management application 150 may then compare, based on a trigger event rule 165, the first inventory data 170A (obtained as described above with reference to FIG. 2A) with the subsequently received second inventory data 170B to determine that the subsequently received second inventory data 170B no longer includes tag data 136 from the tag 115A on item 203A. Based on this determination and the item tag data 169 at the management system 106 indicating that item 203A is a high value item that includes both the tag 115A and the more expensive mmWave tag 116A, the management application 150 may instruct mmWave reader devices 113A-D to locate the missing item 203A according to another trigger event rule 165. For example, a trigger event rule 165 may indicate that when a missing item 203A is or is not detected in a read zone 202 of a reader device 111A, the management application 150 may instruct mmWave reader devices 113C and 113D outside of the read zone 202 in an attempt to locate the missing item 203A (because it may be presumed that the read zone 202 does not include the missing item 203A).

For example, the missing item 203A may have inadvertently been relocated to an area or read zone of the mmWave reader device 113D. The mmWave reader device 113D may receive the instruction from the management application 150 to locate the missing item 203A. This instruction may include at least a portion of the tag data 136 and/or a code 139 of the tag 115A or 116A on the missing item 203A. The mmWave reader device 113D may emit interrogation signals, in some cases, including the code 139, into the read zone of the mmWave reader device 113D. In an embodiment, the mmWave reader device 113D may receive a response with the tag data 136 from all of the mmWave tags 116A-N within the read zone of the mmWave reader device 113D. In this case, the mmWave reader device 113D may transmit the received tag data 136 with the signal metadata 176 to the management system 106 for the management application 150 to determine whether the tag 116A is identified in the tag data 136 received by the mmWave reader device 113D. In another embodiment, the emitted interrogation signals include the code 139, which may instruct the received mmWave tags 116A-N to only respond to the interrogation signal if the tag 116A-N includes at least a portion of the code 139. In this case, the mmWave reader device 113D may only receive a response with tag data 136 from the tag 116A on the missing item 203A or from multiple tags 116A-N on items 203A that are pre-grouped together and include the code 139. The mmWave reader device 113D may transmit the received tag data 136 with the signal metadata 176 to the management system 106 for the management application 150 to determine whether the tag 116A is identified in the tag data 136 received from the mmWave reader device 113D. In either case, the management application 150 may use the response with the tag data 136 and the signal metadata 176 received from the mmWave reader device 113D to determine a precise location of the tag 116A, and thus, the missing item 203A. The management application 150 may store the determined location of the tag 116A (and thus item 203A) as location data 180 in the inventory data 170.

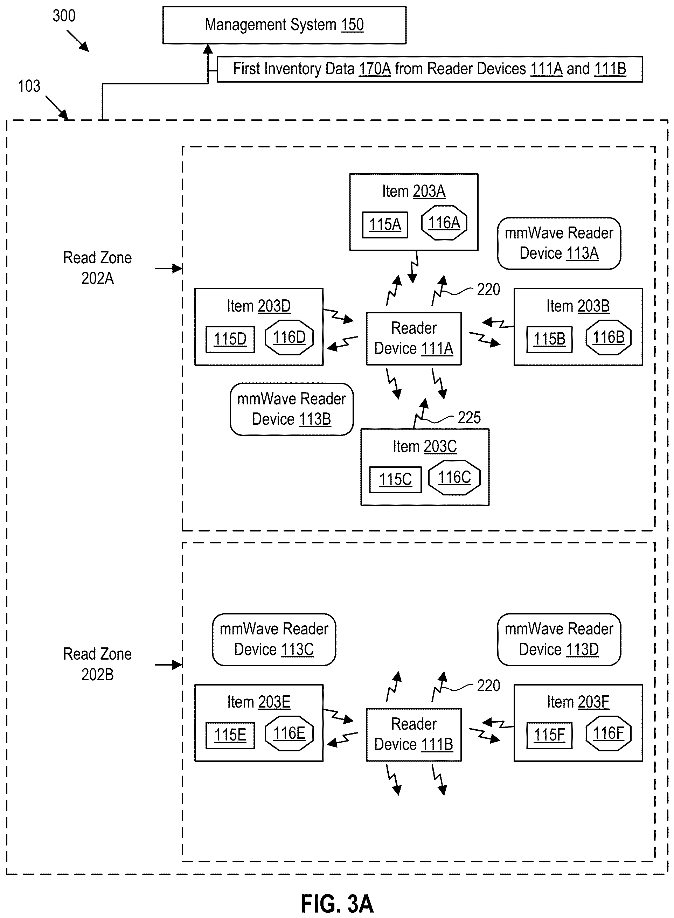

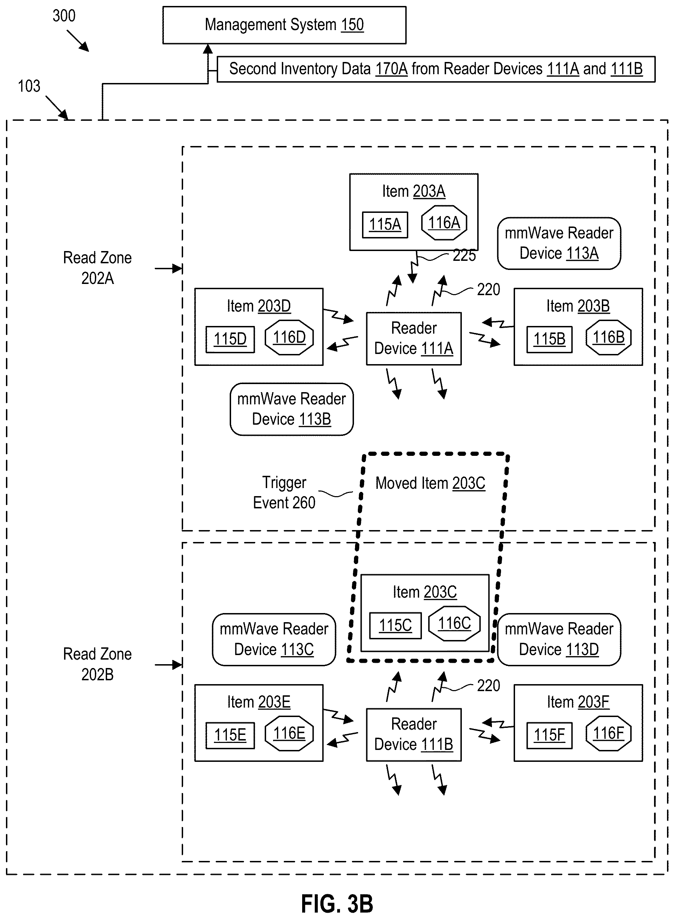

Referring now to FIGS. 3A-3B, shown are diagrams illustrating the detection of a moving item trigger event. Specifically, FIG. 3A illustrates an inventory system and inventory environment 103 prior to the item moving between read zones of different reader devices 111A-N, and FIG. 3B illustrates the inventory system and inventory environment 103 after the item moves between read zones of different reader devices 111A-N.

Turning specifically now to FIG. 3A, shown is an inventory system 300 including the management system 106, reader devices 111A-B, mmWave reader devices 113A-113D, and items 203A-F, each including a tag 115A-F and mmWave tag 116A-F, respectively. The inventory environment 103 includes the reader devices 111A-B, mmWave reader devices 113A-113D, and items 203A-F, each including a tag 115A-F and mmWave tag 116A-F, respectively. It should be appreciated that any number of items, with any number or type of tags, may be at least temporarily located in different areas of the inventory environment 103. Similarly, it should be appreciated that the any number of reader devices 111A-N and mmWave reader devices 113A-N may be deployed in different areas of the inventory environment 103.

As shown in FIG. 3A, the reader device 111A has a read zone 202A, including items 203A, 203B, 203C, and 203D. Item 203A includes a tag 115A and a mmWave tag 116A, item 203B includes a tag 115B and a mmWave tag 116B, item 203C includes a tag 115C and a mmWave tag 116C, and item 203D includes a tag 115D and a mmWave tag 116D. The read zone 202A also includes the mmWave reader devices 113A and 113B.

Meanwhile, the reader device 111B has a read zone 202B, including items 203E and 203F. Item 203E includes a tag 115E and a mmWave tag 116E, and item 203F includes a tag 115F and a mmWave tag 116F. The read zone 202B also includes mmWave reader devices 113C and 113D.

The reader device 111A may scan the read zone 202A to obtain the first inventory data 170A describing the items 203A-D, corresponding tags 115A-D, 116A-D on the items 203A-D, and the signal metadata 176 based on the response signals 225 received from the tags 115A-D. The reader device 111A may transmit the first inventory data 170A of the read zone 202A to the management system 106.

The reader device 111B may similarly scan the read zone 202B to obtain the first inventory data 170A describing the items 203E-F, corresponding tags 115E-F, 116E-F on the items 203E-F, and the signal metadata 176 based on the response signals 225 received from the tags 115E-F. The reader device 111B may transmit the first inventory data 170A of the read zone 202B to the management system 106.

Turning now to FIG. 3B, shown is the inventory system 300 after the item 203C has gone missing from the read zone 202A of the reader device 111A. The inventory system 300 shown in FIG. 3B is substantially the same as the inventory system 300 shown in FIG. 3A, except that the inventory system 300 shown in FIG. 3B shows the item 203C and corresponding tags 115C, 116C in the read zone 202B of the reader device 111B. Items, such as item 203C, may have been purposefully or inadvertently relocated from the read zone 202A to the read zone 202B.

A trigger event 260 may occur when the moved item 203C is detected by, for example, the management application 150 of the management system 106. The management application 150 may detect the moved item trigger event 260 by comparing first inventory data 170A received from the reader device 111A at a first time with second inventory data 170B received from reader device 111A at a subsequent time, which may indicate that tag 115C on item 203C was in the read zone 202A at the first time, but is not in the read zone 202A at the subsequent time. The management application 150 may then receive inventory data 170B from reader device 111B indicating the tag data 136 from tag 115C on item 203C. Based on the comparison and subsequent determination, the management application 150 may then determine that the moved item trigger event 260 has occurred because the item 203C has moved from the read zone 202A to the read zone 202B.

Based on this determination and the item tag data 169 at the management system 106 indicating that item 203C is a high value item with both tag 115C and mmWave tag 116C, the management application 150 may instruct one or more mmWave reader devices 113A-D to locate the moved item 203C according to another trigger event rule 165. For example, a trigger event rule 165 may indicate that when a moved item 203C is detected as having moved into a read zone 202B of another reader device 111B, the management application 150 may instruct mmWave reader devices 113C and 113D within the read zone 202B of the reader device 111B (or other mmWave reader devices 113A-N not in the read zone 202A) in an attempt to locate the missing item 203A (because it may be presumed that the missing item 203C is no longer in the read zone 202A).

For example, the mmWave reader devices 113C and 113D may receive the instruction from the management application 150 to identify a precise location of the moved item 203C. This instruction may include at least a portion of the tag data 136 and/or a code 139 of the tag 115C or mmWave tag 116C on the moved item 203C. The mmWave reader device 113C and 113D may emit interrogation signals, in some cases, including the code 139, into the read zones of the mmWave reader devices 113C and 113D. In an embodiment, the mmWave reader device 113C and 113D may receive a response with the tag data 136 from all of the mmWave tags 116A-N within the read zones of the mmWave reader device 113C and 113D. In this case, the mmWave reader devices 113C and 113D may transmit the received tag data 136 with the signal metadata 176 to the management system 106 for the management application 150 to determine whether the tag 116C is identified in the tag data 136 received from the mmWave reader devices 113C and 113D. In another embodiment, the emitted interrogation signals include the code 139, which may instruct the received mmWave tags 116A-N to only respond to the interrogation signal if the mmWave tag 116A-N includes at least a portion of the code 139. In this case, the mmWave reader devices 113C and 113D may only receive a response with tag data 136 from the tag 116C on the moved item 203A or from multiple tags 116A-N on items 203C that are pre-grouped together and include the code 139. The mmWave reader devices 113C and 113D may transmit the received tag data 136 with the signal metadata 176 to the management system 106 for the management application 150 to determine whether the tag 116C is identified in the tag data 136 received from the mmWave reader device 113D. In either case, the management application 150 may use the response with the tag data 136 and the signal metadata 176 received from the mmWave reader device 113D to determine a precise location of the tag 116C, and thus, the missing item 203A. The management application 150 may store the determined location of the tag 116C (and thus item 203C) as location data 180 in the inventory data 170.

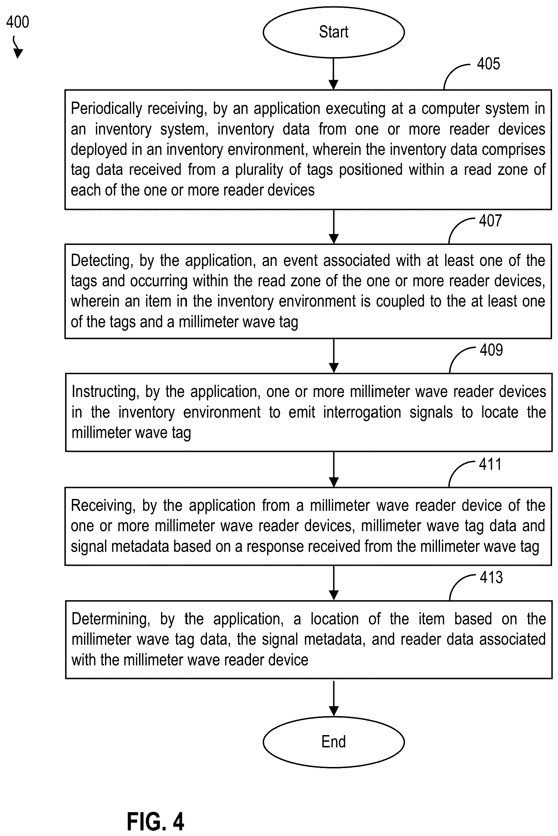

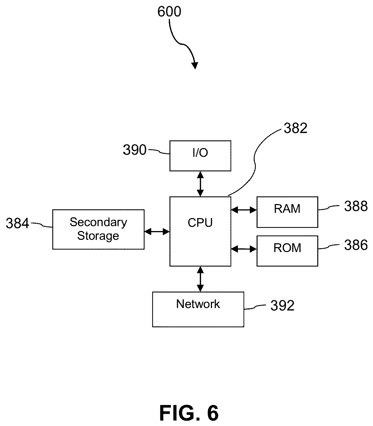

Turning now to FIG. 4, shown is a method 400 of dual-layered tag communications for inventory management and precision tracking. In embodiments, the method 400 may be implemented using a computer system with components as shown in FIG. 6. As illustrated, method 400 of FIG. 4 includes a number of enumerated operations, but embodiments of the operations in FIG. 4 may include additional operations before, after, and in between the enumerated operations. In some embodiments, one or more of the enumerated operations may be omitted or performed in a different order. Method 400 may be performed by an application executing at a computer system, and the application may refer to the management application 150 at the management system 106, the application 118 at the reader devices 111A-N (hereinafter referred to as "reader device 111"), and/or the application 124 at the mmWave reader device 113A-N (hereinafter referred to as "mmWave reader device 113").

At step 405, method 400 comprises periodically receiving, by an application (e.g., the management application 150) executing at a computer system in an inventory system, inventory data 170 from one or more reader devices 111 deployed in an inventory environment 103. In an embodiment, the inventory data 170 comprises tag data 136 received from a plurality of tags (e.g., tags 115A-N (hereinafter referred to as "tags 115")) positioned within a read zone 202 of each of the one or more reader devices 111. At step 407, method 400 comprises detecting, by the application, an event 260 associated with at least one of the tags 115 and occurring within the read zone 202 of the one or more reader devices 111. In an embodiment, an item 203 in the inventory environment 103 is coupled to the at least one of the tags 115 and a mmWave wave tag 116A-N (hereinafter referred to as "mmWave tag 116"). At step 409, method 400 comprises instructing, by the application, one or more mmWave reader devices 113 in the inventory environment 103 to emit interrogation signals to locate the mmWave tag 116.

At step 411, method 400 comprises receiving, by the application from a mmWave reader device 113 of the one or more mmWave reader devices 113, mmWave wave tag data 136 and signal metadata 176 based on a response received from the mmWave tag 116. At step 413, method 400 comprises determining, by the application, a location of the item 203 based on the mmWave tag data 136, the signal metadata 176, and reader data 159 associated with the mmWave reader device 113.

Method 400 may further comprise additional attributes and/or steps not explicitly shown in FIG. 4. In an embodiment, after receiving the inventory data 170, method 400 may further comprise storing, by the application in a memory at the computer system, the inventory data 170 in association with a reader device 111, the inventory data 170 indicating that the one or more tags 115 are positioned within the read zone 202 of the reader device 111. In an embodiment, the read zone 202 of the reader device 111 is an area within the inventory environment 103 in which the reader device 111 is capable of reliably communicating with the one or more tags 115.

In an embodiment, the signal metadata 176 includes a signal strength of the response received by the mmWave reader device 113 and an angle of arrival of the response received by the mmWave reader device 113. In an embodiment, the reader data 159 comprises a location of the mmWave reader device 113. In an embodiment, the event 260 is detected when the at least one of the tags 115 is missing from the read zone 202 of the one or more reader devices 111. In an embodiment, the event 260 is detected when the at least one of the tags 115 moves from a first read zone 202A of a first reader device 111A of the one or more reader devices 111 to a second read zone 202B of a second reader device 111B of the one or more reader devices 111. In an embodiment, the mmWave tag 116 comprises an antenna array configured to focus a direction of a signal carrying the response. In an embodiment, the one or more mmWave reader devices 113 are positioned within a predefined distance from the one or more reader devices 111.

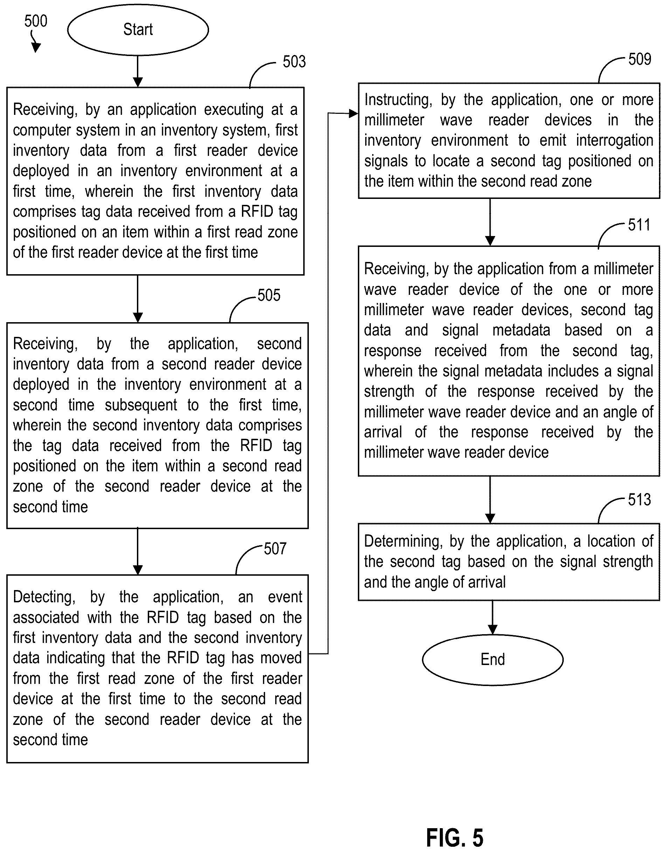

Turning now to FIG. 5, shown is another method 500 of dual-layered tag communications for inventory management and precision tracking. In embodiments, the method 500 may be implemented using a computer system with components as shown in FIG. 6. As illustrated, method 500 of FIG. 5 includes a number of enumerated operations, but embodiments of the operations in FIG. 5 may include additional operations before, after, and in between the enumerated operations. In some embodiments, one or more of the enumerated operations may be omitted or performed in a different order. Method 500 may be performed by an application executing at a computer system, and the application may refer to the management application 150 at the management system 106, the application 118 at the reader devices 111, and/or the application 124 at the mmWave reader device 113.

At step 503, method 500 comprises receiving, by an application (e.g., the management application 150) executing at a computer system in an inventory system, first inventory data 170A from a first reader device 111A deployed in an inventory environment 103 at a first time. In an embodiment, the inventory data 170 comprises tag data 136 received from an RFID tag 115 positioned on an item 203 within a first read zone 202A of the first reader device 111A at the first time. At step 505, method 500 comprises receiving, by the application, second inventory data 170B from a second reader device 111B deployed in the inventory environment 103 at a second time subsequent to the first time. In an embodiment, the inventory data 170B comprises the tag data received from the RFID tag 115 positioned on the item 203 within a second read zone 202B of the second reader device 111B at the second time.

At step 507, method 500 comprises detecting, by the application, an event 260 associated with the RFID tag 115 based on the first inventory data 170A and the second inventory data 170B indicating that the RFID tag 115 has moved from the first read zone 202A of the first reader device 111A at the first time to the second read zone 202B of the second reader device 111B at the second time. At step 509, method 500 comprises instructing, by the application, one or more mmWave reader devices 113 in the inventory environment 103 to emit interrogation signals to locate a second tag (e.g., mmWave tag 116) positioned on the item 203 within the second read zone 202A.

At step 511, method 500 comprises receiving, by the application from a mmWave reader device 113 of the one or more mmWave reader devices 113, second tag data 136 (e.g., mmWave wave tag data 136) and signal metadata 176 based on a response received from the second tag. At step 513, method 500 comprises determining, by the application, a location of the second tag based on the signal strength and the angle of arrival.

Method 500 may further comprise additional attributes and/or steps not explicitly shown in FIG. 5. In an embodiment, the one or more mmWave reader devices 113 are within a predefined distance from the second reader device 111B. In an embodiment, the first read zone 202A of the first reader device 111A is a first area within the inventory environment 103 in which the first reader device 111A is capable of reliably communicating with the RFID tag 115, and the second read zone 202B of the second reader device 111B is a second area within the inventory environment 103 in which the second reader device 111B is capable of reliably communicating with the tag 115.

In an embodiment, the first reader device 111A and second reader device 111B operate over a frequency range between 300 megahertz (MHz) and 3 gigahertz (GHz), and the RFID tag 115 is configured to operate over the frequency range between 300 MHz and 3GHz. In an embodiment, the one or more mmWave reader devices 113 operate over a frequency range between 3 gigahertz (GHz) and 300 GHz, and the second tag 116 is configured to operate over the frequency range between 3 GHz and 300 GHz.

FIG. 6 illustrates a computer system 600 suitable for implementing one or more embodiments disclosed herein. In an embodiment, the management system 106, reader devices 111, and/or reader devices 113, etc., may each be implemented as the computer system 600. The computer system 600 includes a processor 382 (which may be referred to as a central processor unit or CPU) that is in communication with memory devices including secondary storage 384, read only memory (ROM) 386, random access memory (RAM) 388, input/output (I/O) devices 390, and network connectivity devices 392. The processor 382 may be implemented as one or more CPU chips.

It is understood that by programming and/or loading executable instructions onto the computer system 600, at least one of the CPU 382, the RAM 388, and the ROM 386 are changed, transforming the computer system 600 in part into a particular machine or apparatus having the novel functionality taught by the present disclosure. It is fundamental to the electrical engineering and software engineering arts that functionality that can be implemented by loading executable software into a computer can be converted to a hardware implementation by well-known design rules. Decisions between implementing a concept in software versus hardware typically hinge on considerations of stability of the design and numbers of units to be produced rather than any issues involved in translating from the software domain to the hardware domain. Generally, a design that is still subject to frequent change may be preferred to be implemented in software, because re-spinning a hardware implementation is more expensive than re-spinning a software design. Generally, a design that is stable that will be produced in large volume may be preferred to be implemented in hardware, for example in an application specific integrated circuit (ASIC), because for large production runs the hardware implementation may be less expensive than the software implementation. Often a design may be developed and tested in a software form and later transformed, by well-known design rules, to an equivalent hardware implementation in an application specific integrated circuit that hardwires the instructions of the software. In the same manner as a machine controlled by a new ASIC is a particular machine or apparatus, likewise a computer that has been programmed and/or loaded with executable instructions may be viewed as a particular machine or apparatus.

Additionally, after the system 600 is turned on or booted, the CPU 382 may execute a computer program or application. For example, the CPU 382 may execute software or firmware stored in the ROM 386 or stored in the RAM 388. In some cases, on boot and/or when the application is initiated, the CPU 382 may copy the application or portions of the application from the secondary storage 384 to the RAM 388 or to memory space within the CPU 382 itself, and the CPU 382 may then execute instructions that the application is comprised of. In some cases, the CPU 382 may copy the application or portions of the application from memory accessed via the network connectivity devices 392 or via the I/O devices 390 to the RAM 388 or to memory space within the CPU 382, and the CPU 382 may then execute instructions that the application is comprised of. During execution, an application may load instructions into the CPU 382, for example load some of the instructions of the application into a cache of the CPU 382. In some contexts, an application that is executed may be said to configure the CPU 382 to do something, e.g., to configure the CPU 382 to perform the function or functions promoted by the subject application. When the CPU 382 is configured in this way by the application, the CPU 382 becomes a specific purpose computer or a specific purpose machine.

The secondary storage 384 is typically comprised of one or more disk drives or tape drives and is used for non-volatile storage of data and as an over-flow data storage device if RAM 388 is not large enough to hold all working data. Secondary storage 384 may be used to store programs which are loaded into RAM 388 when such programs are selected for execution. The ROM 386 is used to store instructions and perhaps data which are read during program execution. ROM 386 is a non-volatile memory device which typically has a small memory capacity relative to the larger memory capacity of secondary storage 384. The RAM 388 is used to store volatile data and perhaps to store instructions. Access to both ROM 386 and RAM 388 is typically faster than to secondary storage 384. The secondary storage 384, the RAM 388, and/or the ROM 386 may be referred to in some contexts as computer readable storage media and/or non-transitory computer readable media.

I/O devices 390 may include printers, video monitors, liquid crystal displays (LCDs), touch screen displays, keyboards, keypads, switches, dials, mice, track balls, voice recognizers, card readers, paper tape readers, or other well-known input devices.

The network connectivity devices 392 may take the form of modems, modem banks, Ethernet cards, universal serial bus (USB) interface cards, serial interfaces, token ring cards, fiber distributed data interface (FDDI) cards, wireless local area network (WLAN) cards, radio transceiver cards, and/or other well-known network devices. The network connectivity devices 392 may provide wired communication links and/or wireless communication links (e.g., a first network connectivity device 392 may provide a wired communication link and a second network connectivity device 392 may provide a wireless communication link). Wired communication links may be provided in accordance with Ethernet (IEEE 802.3), Internet protocol (IP), time division multiplex (TDM), data over cable service interface specification (DOCSIS), wavelength division multiplexing (WDM), and/or the like. In an embodiment, the radio transceiver cards may provide wireless communication links using protocols such as code division multiple access (CDMA), global system for mobile communications (GSM), long-term evolution (LTE), WiFi (IEEE 802.11), Bluetooth, Zigbee, narrowband Internet of things (NB IoT), near field communications (NFC), and radio frequency identity (RFID). The radio transceiver cards may promote radio communications using 5G, 5G New Radio, or 5G LTE radio communication protocols. These network connectivity devices 392 may enable the processor 382 to communicate with the Internet or one or more intranets. With such a network connection, it is contemplated that the processor 382 might receive information from the network, or might output information to the network in the course of performing the above-described method steps. Such information, which is often represented as a sequence of instructions to be executed using processor 382, may be received from and outputted to the network, for example, in the form of a computer data signal embodied in a carrier wave.

Such information, which may include data or instructions to be executed using processor 382 for example, may be received from and outputted to the network, for example, in the form of a computer data baseband signal or signal embodied in a carrier wave. The baseband signal or signal embedded in the carrier wave, or other types of signals currently used or hereafter developed, may be generated according to several methods well-known to one skilled in the art. The baseband signal and/or signal embedded in the carrier wave may be referred to in some contexts as a transitory signal.

The processor 382 executes instructions, codes, computer programs, scripts which it accesses from hard disk, floppy disk, optical disk (these various disk based systems may all be considered secondary storage 384), flash drive, ROM 386, RAM 388, or the network connectivity devices 392. While only one processor 382 is shown, multiple processors may be present. Thus, while instructions may be discussed as executed by a processor, the instructions may be executed simultaneously, serially, or otherwise executed by one or multiple processors. Instructions, codes, computer programs, scripts, and/or data that may be accessed from the secondary storage 384, for example, hard drives, floppy disks, optical disks, and/or other device, the ROM 386, and/or the RAM 388 may be referred to in some contexts as non-transitory instructions and/or non-transitory information.

In an embodiment, the computer system 600 may comprise two or more computers in communication with each other that collaborate to perform a task. For example, but not by way of limitation, an application may be partitioned in such a way as to permit concurrent and/or parallel processing of the instructions of the application. Alternatively, the data processed by the application may be partitioned in such a way as to permit concurrent and/or parallel processing of different portions of a data set by the two or more computers. In an embodiment, virtualization software may be employed by the computer system 600 to provide the functionality of a number of servers that is not directly bound to the number of computers in the computer system 600. For example, virtualization software may provide twenty virtual servers on four physical computers. In an embodiment, the functionality disclosed above may be provided by executing the application and/or applications in a cloud computing environment. Cloud computing may comprise providing computing services via a network connection using dynamically scalable computing resources. Cloud computing may be supported, at least in part, by virtualization software. A cloud computing environment may be established by an enterprise and/or may be hired on an as-needed basis from a third-party provider. Some cloud computing environments may comprise cloud computing resources owned and operated by the enterprise as well as cloud computing resources hired and/or leased from a third-party provider.

In an embodiment, some or all of the functionality disclosed above may be provided as a computer program product. The computer program product may comprise one or more computer readable storage medium having computer usable program code embodied therein to implement the functionality disclosed above. The computer program product may comprise data structures, executable instructions, and other computer usable program code. The computer program product may be embodied in removable computer storage media and/or non-removable computer storage media. The removable computer readable storage medium may comprise, without limitation, a paper tape, a magnetic tape, magnetic disk, an optical disk, a solid state memory chip, for example analog magnetic tape, compact disk read only memory (CD-ROM) disks, floppy disks, jump drives, digital cards, multimedia cards, and others. The computer program product may be suitable for loading, by the computer system 600, at least portions of the contents of the computer program product to the secondary storage 384, to the ROM 386, to the RAM 388, and/or to other non-volatile memory and volatile memory of the computer system 600. The processor 382 may process the executable instructions and/or data structures in part by directly accessing the computer program product, for example by reading from a CD-ROM disk inserted into a disk drive peripheral of the computer system 600. Alternatively, the processor 382 may process the executable instructions and/or data structures by remotely accessing the computer program product, for example by downloading the executable instructions and/or data structures from a remote server through the network connectivity devices 392. The computer program product may comprise instructions that promote the loading and/or copying of data, data structures, files, and/or executable instructions to the secondary storage 384, to the ROM 386, to the RAM 388, and/or to other non-volatile memory and volatile memory of the computer system 600.

In some contexts, the secondary storage 384, the ROM 386, and the RAM 388 may be referred to as a non-transitory computer readable medium or a computer readable storage media. A dynamic RAM embodiment of the RAM 388, likewise, may be referred to as a non-transitory computer readable medium in that while the dynamic RAM receives electrical power and is operated in accordance with its design, for example during a period of time during which the computer system 600 is turned on and operational, the dynamic RAM stores information that is written to it. Similarly, the processor 382 may comprise an internal RAM, an internal ROM, a cache memory, and/or other internal non-transitory storage blocks, sections, or components that may be referred to in some contexts as non-transitory computer readable media or computer readable storage media.

While several embodiments have been provided in the present disclosure, it should be understood that the disclosed systems and methods may be embodied in many other specific forms without departing from the scope of the present disclosure. The present examples are to be considered as illustrative and not restrictive, and the intention is not to be limited to the details given herein. For example, the various elements or components may be combined or integrated in another system or certain features may be omitted or not implemented.

Also, techniques, systems, subsystems, and methods described and illustrated in the various embodiments as discrete or separate may be combined or integrated with other systems, modules, techniques, or methods without departing from the scope of the present disclosure. Other items shown or discussed as directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the scope disclosed herein.

## Claims

1. A method of dual-layered tag communications for inventory management and precision tracking, wherein the method comprises:
receiving, by an application executing at a computer system in an inventory system, first inventory data from a first reader device deployed in an inventory environment at a first time, wherein the first inventory data comprises tag data received from a RFID tag positioned on an item within a first read zone of the first reader device at the first time;
receiving, by the application, second inventory data from a second reader device deployed in the inventory environment at a second time subsequent to the first time, wherein the second inventory data comprises the tag data received from the RFID tag positioned on the item within a second read zone of the second reader device at the second time;
detecting, by the application, an event associated with the RFID tag based on the first inventory data and the second inventory data indicating that the RFID tag has moved from the first read zone of the first reader device at the first time to the second read zone of the second reader device at the second time;
instructing, by the application, one or more millimeter wave reader devices in the inventory environment to emit interrogation signals to locate a second tag positioned on the item within the second read zone;
receiving, by the application from a millimeter wave reader device of the one or more millimeter wave reader devices, second tag data and signal metadata based on a response received from the second tag, wherein the signal metadata includes a signal strength of the response received by the millimeter wave reader device and an angle of arrival of the response received by the millimeter wave reader device; and
determining, by the application, a location of the second tag based on the signal strength and the angle of arrival.

2. The method of claim 1, wherein the one or more millimeter wave reader devices are within a predefined distance from the second reader device.

3. The method of claim 1 or 2, wherein the first read zone of the first reader device is a first area within the inventory environment in which the first reader device is capable of reliably communicating with the RFID tag, and wherein the second read zone of the second reader device is a second area within the inventory environment in which the second reader device is capable of reliably communicating with the RFID tag.

4. The method of any preceding claim, wherein:
the first reader device and second reader device operate over a frequency range between 300 megahertz (MHz) and 3 gigahertz (GHz), and wherein the RFID tag is configured to operate over the frequency range between 300 MHz and 3GHz; or
the one or more millimeter wave reader devices operate over a frequency range between 3 gigahertz (GHz) and 300 GHz, and wherein the second tag is configured to operate over the frequency range between 3 GHz and 300 GHz.

5. An inventory system, comprising:
an item coupled to:
a RFID tag configured to emit first signals omnidirectionally; and
a millimeter wave tag configured to emit second signals in a predefined direction;
a first reader device configured to:
at a first time:
receive first signals carrying RFID tag data from the RFID tag on the item; and
forward the RFID tag data to a management system,
wherein at a second time subsequent to the first time, the first signals are not received from the RFID tag,
the management system, comprising:
an application stored in a memory of the management system, which when executed by a processor of the management, causes the application to be configured to:
store, after the first time, the RFID tag data;
determine, after the second time, that a trigger event has occurred based on the RFID tag not being detected by the first reader device; and
instruct a millimeter wave reader device to emit interrogation signals to locate the item in response to the trigger event; and
the millimeter wave reader device configured to:
receive, from the millimeter wave tag on the item, second signals carrying second tag data and signal metadata describing the second signals; and
forward the second tag data and signal metadata to the management system,
wherein the application at the management system is further configured to determine a location of the item based on the second tag data and the signal metadata.

6. The inventory system of claim 5, wherein the millimeter wave reader device is deployed proximate to an exit of an inventory environment.

7. The inventory system of claim 5 or 6, wherein the item is a predefined type of item assigned to be coupled to both the RFID tag and the millimeter wave tag.

8. The inventory system of any one of claims 5 to 7, wherein at least one of the RFID tag or the millimeter wave tag comprises a memory storing a code that is received in the first signals or the second signals, wherein the interrogation signals emitted by the millimeter wave reader device comprise the code to instruct tags to only respond to the interrogation signals when the tags include the code.

9. The inventory system of any one of claims 5 to 8, wherein the application is configured to instruct a plurality of millimeter wave reader devices to emit interrogation signals to locate the item in response to the trigger event.

10. A method, comprising:
periodically receiving, by an application executing at a computer system in an inventory system, inventory data from one or more reader devices deployed in an inventory environment, wherein the inventory data comprises tag data received from a plurality of tags positioned within a read zone of each of the one or more reader devices;
detecting, by the application, an event associated with at least one of the tags and occurring within the read zone of the one or more reader devices, wherein an item in the inventory environment is coupled to the at least one of the tags and a millimeter wave tag;
instructing, by the application, one or more millimeter wave reader devices in the inventory environment to emit interrogation signals to locate the millimeter wave tag;
receiving, by the application from a millimeter wave reader device of the one or more millimeter wave reader devices, millimeter wave tag data and signal metadata based on a response received from the millimeter wave tag; and
determining, by the application, a location of the item based on the millimeter wave tag data, the signal metadata, and reader data associated with the millimeter wave reader device.

11. The method of claim 10, wherein after receiving the inventory data, the method further comprises storing, by the application in a memory at the computer system, the inventory data in association with a reader device, wherein the inventory data indicates that the tags are positioned within the read zone of the reader device, and wherein the read zone of the reader device is an area within the inventory environment in which the reader device is capable of reliably communicating with the tags.

12. The method of claim 10 or 11, wherein the signal metadata includes a signal strength of the response received by the millimeter wave reader device and an angle of arrival of the response received by the millimeter wave reader device.

13. The method of any one of claims 10 to 12, wherein the reader data comprises a location of the millimeter wave reader device.

14. The method of any one of claims 10 to 13, wherein:
the event is detected when the at least one of the tags is missing from the read zone of the one or more reader devices; or
the event is detected when the at least one of the tags moves from a first read zone of a first reader device of the one or more reader devices to a second read zone of a second reader device of the one or more reader devices.

15. The method of any one of claims 10 to 14, wherein at least one of:
the millimeter wave tag comprises an antenna array configured to focus a direction of a signal carrying the response; and
the one or more millimeter wave reader devices are positioned within a predefined distance from the one or more reader devices.
